# EUROPÄISCHE PATENTSCHRIFT

(11) **EP 2 002 254 B1**
(45) Veröffentlichungstag und Bekanntmachung des Hinweises auf die Patenterteilung: **07.05.2014**
(21) Anmeldenummer: 07727143.5
(22) Anmeldetag: 20.03.2007
(51) Int. Cl.: G01N 27/407, G01K 1/08, G01K 1/14

(54) **VERFAHREN ZUR HERSTELLUNG EINES GASSENSORS FÜR HOCHTEMPERATURANWENDUNGEN**
METHOD OF PRODUCING A MEASUREMENT SENSOR FOR HIGH-TEMPERATURE APPLICATIONS
PROCEDE DE FABRICATION D'UNE SONDE DE MESURE POUR APPLICATIONS A HAUTE TEMPERATURE

(30) Priorität: 31.03.2006 DE 102006015427
(43) Veröffentlichungstag der Anmeldung: 17.12.2008
(73) Patentinhaber: Tesona GmbH & Co. KG, 99819 Hörselberg (DE)
(72) Erfinder: HOLLAND-MORITZ, Denny, 98587 Steinbach-Hallenberg (DE); BLUM, Hendrik, 98544 Zella-Mehlis (DE)
(74) Vertreter: Meissner, Bolte & Partner GbR
(86) Internationale Anmeldenummer: PCT/EP2007/052666
(87) Internationale Veröffentlichungsnummer: WO 2007/113105

(56) Entgegenhaltungen:
- EP-A2- 0 056 585
- DE-A1- 3 237 824
- DE-A1- 19 500 147
- US-A- 4 415 876
- US-A- 5 228 975

## Beschreibung

Die vorliegende Erfindung betrifft ein Verfahren zur Herstellung eines Messfühlers. Der Messfühler eignet sich zur Bestimmung von physikalischen Größen oder Stoffzusammensetzungen in Räumen bzw. Messvolumen mit hohen Temperaturen, insbesondere im Bereich von etwa 1000° Celsius.

Die Kontrolle, Steuerung und Regelung von Prozessen, in denen hohe Temperaturen auftreten, erfordert Messfühler, deren Funktion auch auf Dauer nicht durch die hohen Temperaturen eingeschränkt ist. Ein Beispiel hierfür ist ein Abgassensor in der Abgasanlage eines Verbrennungsmotors eines Kraftfahrzeugs. Ein solcher Sensor ist großen Beanspruchungen hinsichtlich Temperatur, Druck, Erschütterungen und Korrosion ausgesetzt, so dass es frühzeitig zu Undichtigkeiten, Messungenauigkeiten oder Ausfällen kommen kann.

Aus der DE 100 60 027 A1 ist eine Dichtungsanordnung für einen Temperatur-oder Gassensor bekannt, bei welcher das Dichtungselement aus einem Graphitfolienkörper gebildet ist. Ein solcher Graphitfolienkörper ist einfach und kostengünstig bereitzustellen. Nachteilig an dieser Lösung ist, dass es einer reduzierenden Atmosphäre für die Anwendung des Sensors bei Temperaturen über 500° Celsius und einer elekrischen Isolierung zwischen dem Graphitfolienkörper und dem Sensor bedarf. Die thermische und mechanische Belastbarkeit des Graphitfolienkörpers ist für viele Anwendungen nicht ausreichend.

Aus der DE 195 00 147 A 1 ist ein elektrochemischer Messfühler zur Bestimmung des Sauerstoffgehaltes in Abgasen von Verbrennungsmotoren bekannt, dessen Dichtung eine Glaseinschmelzung aufweist. Diese Glaseinschmelzung ermöglicht einerseits einen potenzialfreien Einbau des Messfühlers in das metallische Gehäuse der Abgasanlage und zum anderen ist durch die Verwendung von Glas als Dichtungswerkstoff eine hohe Temperatur- und Druckbeständigkeit dieser Dichtung gewährleistet. Die Verwendung von Glas als Werkstoff für die Dichtung erfordert jedoch einen speziellen Aufbau der Dichtungseinheit, um insbesondere die erforderliche mechanische Stabilität zu gewährleisten. Hierfür ist die Dichtungseinheit im Wesentlichen aus einem keramischen Dichtring gebildet, der durch eine Schicht der Glaseinschmelzung fast vollständig umschlossen ist. Der keramische Dichtring nimmt einen Großteil der auf die Dichtungseinheit wirkenden Kräfte auf. Hierfür ist der keramische Dichtring auf der einen Seite konusförmig gestaltet, so dass er einen schulterförmigen Dichtsitz des Sensorelements aufnehmen kann. Auf der anderen Seite des keramischen Dichtringes ist ein druckverteilender Dichtring angeordnet, welcher den auf den Sensor wirkenden Druck gleichmäßig auf den Gehäusesitz verteilt. Die Dichtungseinheit weist weiterhin eine metallische Hülse auf, um die mechanische Stabilität der Dichtungseinheit zu gewährleisten. Der Nachteil dieser Lösung ist die aufwändige Anordnung mehrerer Komponenten für die Dichtungseinheit, welche durch die Verwendung einer Glaseinschmelzung notwendig ist. Die Anordnung mehrere Komponenten zur Erzielung einer mechanisch beanspruchbaren Befestigung des Sensors bewirkt gleichzeitig eine höhere Anfälligkeit der Dichtungseinheit, da das Zusammenspiel der Komponenten bei hoher mechanischer Beanspruchung gestört werden kann.

Aus der EP 1 083 426 A2 ist ein Gehäuse für einen Sensor mit einer zylindrischen Schutzkappe vorbekannt, wobei die Schutzkappe Durchtrittsöffnungen aufweist. Die Durchtrittsöffnungen sind kreisförmig ausgebildet, wobei der Strömungsweg zwischen dem Äußeren der Schutzkappe und dem Inneren der Schutzkappe nur durch die Durchtrittsöffnungen begrenzt ist und Verbindungslinien der Mittelpunkte der in Umtangsrichtung benachbarten Durchtrittsöffnungen auf der abgewickelten Mantelfläche der Kappe im Winkel von 45° zur Längsachse der Kappe verlaufen.

Die DE 101 15 704 C1 zeigt ein Gehäuse für einen Temperatur- oder Gassensor. Im dort vorgesehenen Keramikformteil ist ein Schlitz mit rechteckigem Querschnitt ausgebildet. In diesem Schlitz ist ein Sensorelement aufgenommen und es sind im Keramikformteil Einschnitte vorhanden, die den Schlitz zur Kontaktierung freilegen. Im Raum der Einschnitte wird ein Faserpaket zwischen Sensorelement und Schutzgehäuse angeordnet, welches Vibrationen vom Sensor abhält.

Bei dem Verfahren zur Herstellung eines Temperatur- oder Gassensors nach DE 101 27 871 C1 soll ein Gehäuse bereitgestellt werden, dass eine partikeldichte Trennung zwischen dem Mess- und Anschlussbereich des Sensors gewährleistet, ohne den Gasaustausch von Mess- zum Anschlussbereich des Sensors zu unterbinden.

Zum weiteren Stand der Technik sei noch auf die DE 35 37 051 A1 sowie die DE 198 50 959 A1 aufmerksam gemacht.

Die DE 3237824 A1 offenbart einen Kraftfahrzeugabgas-Sauerstoffsensor mit einer Keramikhülse mit einer Innenbohrung. In die Bohrung ist ein Titanoxid-Pellet eingesetzt, dessen Anschlussleitungen durch axiale Abstandshalter voneinander isoliert sind. Jeweils zwei Abstandshalter werden durch jeweils eine Schmelzglasdichtung zwischen den Abstandshaltern abgedichtet und mit der Keramikhülse verbunden.

In der US 5 228 975 wird ein Gassensor gezeigt, dessen Sensorelement in einer Keramikröhre gasdicht eingebaut ist. Die Keramikhülse ist wiederum in ein Metallgehäuse eingebaut durch einen kreisförmigen Abstandshalter und anorganischen Zement.

Die Aufgabe der vorliegenden Erfindung besteht darin, ein Verfahren zur Herstellung einer Glasfüllung eines Messfühlers für die Bestimmung einer physikalischen Größe oder einer Stoffzusammensetzung in Räumen mit hoher Temperaturbelastung, z.B. im Bereich von ≥ 1000° Celsius bereitzustellen, wobei der so hergestellte Messfühler bei großen Beanspruchungen hinsichtlich Temperatur, Druck, Erschütterungen und Korrosion über einen langen Zeitraum einen dichten und festen Sitz gewährleistet.

Die Aufgabe wird gelöst durch ein Verfahren zur Herstellung eines Messfühlers nach Anspruch 1.

Ein wichtiger Aspekt der Erfindung ist darin zu sehen, dass eine Glaseinschmelzung als Dichtung zwischen einer äußeren, z.B. metallischen Befestigungshülse und einem durchgeführten, den Sensor tragenden Anschlussrohr fungiert. Weitere Befestigungsmittel oder andere unterstützende Mittel können entfallen.

Ein besonderer Vorteil der Erfindung besteht darin, dass durch die Gestaltung der Befestigungshülse die Einbringung einer Glasfüllung ermöglicht ist, die gleichzeitig eine dauerhaft sichere und dichte Befestigungsmöglichkeit sowie eine elektrische Isolierung gegen das Gehäuse bereitstellt.

Ein weiterer Vorteil dieser Erfindung ist die Beständigkeit der Glasfüllung gegen aggressive Medien, die beispielsweise bei der Verbrennung von Kraftstoffen im Abgasstrom entstehen.

Die Glasfüllung wird über das Einbringen eines durch Pressen erzeugten Ringes realisiert, der im Einschmelzprozess aufschmilzt. Beim Aufschmelzen verteilt sich das Glasmaterial in einem vorgesehenen Spalt zwischen der Befestigungshülse und dem Rohr. Dieser Spalt für die Einblasung liegt im Bereich bis zur 8/10 mm Breite. Das Verbindungsmittel Glas kann im vorliegenden Fall als druckübertragendes Dichtmittel verstanden werden.

Weitere Vorteile, Einzelheiten und Weiterbildungen der Erfindung ergeben sich aus den nachfolgenden Beschreibungen bevorzugter Ausführungsformen, unter Bezugnahme auf die Zeichnungen. Es zeigen:
Fig. 1 einen nach einem erfindungsgemäßen Verfahren hergestellten Messfühler in einer Ausführung als Abgastemperatursensor für ein Kraftfahrzeug;
Fig. 2 eine Schnittdarstellung einer Dichtungsanordnung des in Fig. 1 gezeigten Messfühlers;
Fig. 3 eine Schnittdarstellung der Dichtungsanordnung einer abgewandelten Ausführungsform des Messfühlers und
Fig. 4 drei Schnittdarstellung von Dichtungsanordnungen verschiedener Ausführungsformen des Messfühlers.

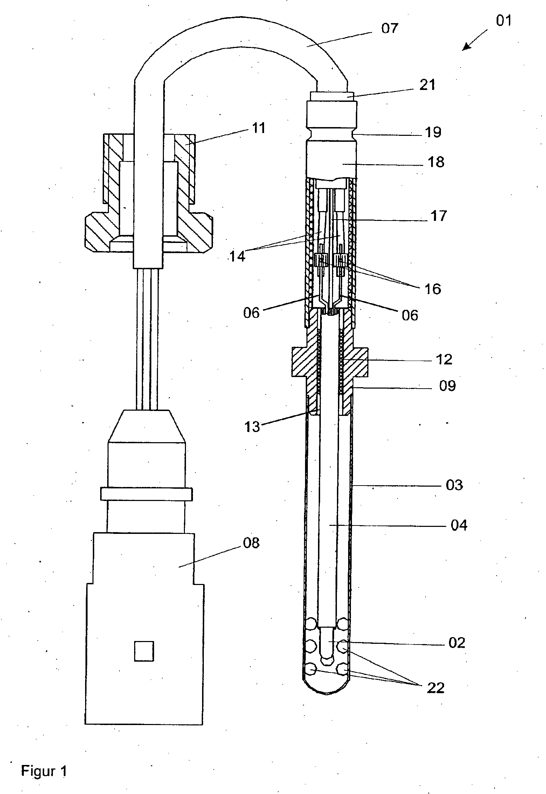

Die Fig. 1 zeigt einen nach einem erfindungsgemäßen Verfahren hergestellten Messfühler als Abgastemperatursensor 01. Der Abgastemperatursensor 01 dient zur Bestimmung der Temperatur im Abgasstrom in einer Abgasanlage eines Kraftfahrzeuges mit Verbrennungsmotor. Der Abgastemperatursensor 01 umfasst ein Sensorelement 02, welches in das zu messende Abgas hineinragt. Das Sensorelement 02 kann beispielsweise durch einen Temperatursensor des Typs PT-200 in Form einer so genannten Pille gebildet sein. Eine Sensorschutzhülse oder ein einfacher Fangkorb 03 schützt das Sensorelement 02 insbesondere gegen größere Partikel im Abgasstrom, welche das Sensorelement 02 schädigen könnten. Die Sensorschutzhülse 03 dient aber auch dem Schutz der im Abgasstrom nachfolgenden Bauteile für den Fall, dass die Pille abbrechen sollte. Das Sensorelement 02 ist an einem Rohr oder einem Stab 04 angebracht, welches bzw. welcher gleichzeitig zur Aufnahme oder zur Durchführung von Leitungen zum elektrischen Anschluss des Sensorelements 02 dient. Für den elektrischen Anschluss weist der Abgastempera□tursensor 01 ein Kabel 07 mit einem Stecker 08 auf.

Das Rohr 04 und das von diesem getragene Sensorelement 02 werden mit einer Befestigungshülse 09 z.B. am Gehäuse der Abgasanlage (nicht gezeigt) befestigt. Die Befestigungshülse 09 dient zudem der Abdichtung zwischen dem Rohr 04 und dem Gehäuse der Abgasanlage. Dazu wird die Befestigungshülse 09 in eine dafür vorgesehen Öffnung im Gehäuse der Abgasanlage eingebracht und beispielsweise mit einer Hohlmutter geschert. Das Gehäuse der Abgasanlage weist an der Öffnung ein Gewinde auf, auf welches die Hohlmutter 11 aufgeschraubt wird. Die Fig. 1 zeigt den Abgastemperatursensor im ausgebauten Zustand, wobei sich die Hohlmutter 11 an einer beliebigen Position verschiebbar auf dem Kabel 07 befindet.

Das Rohr 04 ist in der Befestigungshülse 09 mit einer Glaseinschmelzung 12 druckdicht fixiert. Da das verwendete Glas eine Schmelztemperatur von mindestens 1000 bis 1200° Celsius aufweist, ist diese Befestigung bei den in Bereich der Befestigungshülse noch auftretenden Temperaturen von z.B. bis zu 700° Celsius den thermischen Belastungen gewachsen. Auch nach einer längeren Betriebsdauer wird die Glaseinschmelzung 12 nicht spröde, so dass die Befestigung ihre Festigkeit beibehält. Sollte es durch einen Schaden in der Abgasanlage zu eine erhöhten Temperatur am Abgastemperatursensor 01 kommen, so kann die Temperatur kurzzeitig auch mehr als 700° Celsius betragen, ohne dass die Befestigung geschädigt wird. Da das verwendete Glas der Glaseinschmelzung 12 eine geringe Wärmeleitfähigkeit aufweist, wird wenig Wärme vom Rohr 04 auf die Befestigungshülse 09 übertragen. Dadurch ist die thermische Belastung der Befestigungshülse 09 und der Seite des Messfühlers im Bereich der elektrischen Verbindung 16 gemindert. Die Glaseinschmelzung 12 stellt die einzige Befestigung des Rohres 04 am Gehäuse der Abgasanlage dar. Da das verwendete Glas elektrisch isolierend wirkt, ist gleichzeitig eine elektrische Isolation der Anschlussleitungen des Sensorelements 02 gegenüber dem Massepotenzial am Gehäuse der Abgasanlage gewährleistet.

Das Rohr 04 ist bei der in Fig. 1 gezeigten Ausführungsform zylinderförmig ausgeführt. Zur Aufnahme des zylindenörmigen Rohres 04 weist die Befestigungshülse 09 eine zylinderförmige Öffnung auf, deren Durchmesser geringfügig größer als der Durchmesser des Rohres 04 ist. Folglich verbleibt vor der abschließenden Einschmelzung zwischen dem Rohr 04 und der Befestigungshülse 09 ein umlaufender Spalt 13. Die Höhe der zylinderförmigen Öffnung der Befestigungshülse 09 beträgt vorzugsweise ein Mehrfaches des Durchmessers der Öffnung. Dadurch erstreckt sich der Spalt 13 über eine Länge, die größer als der Durchmesser der Öffnung ist. Da der bis zu 8/10 mm breite Spalt 13 den Raum für die Glaseinschmelzung 12 bereitstellt, kann auch die Glaseinschmelzung 12 eine Höhe aufweisen, die einem Mehrfachen des Durchmessers der Glaseinschmelzung 12 entspricht. Folglich weist die durch die Glaseinschmelzung 12 gebildete Befestigung eine Umfangsfläche auf, die wesentlich größer als die Querschnittsfläche des Rohres 04 ist. Gleichzeitig ist die Dicke der hohlzylinderförmigen Glaseinschmelzung 12, welche durch die Breite des Spalts 13 bestimmt wird, wesentlich kleiner als der Radius der Öffnung der Befestigungshülse 09. Diese Gestaltung der Befestigung des Rohres 04 an der Befestigungshülse 09 ermöglicht, dass die durch die Glaseinschmelzung 12 gebildete Befestigung hohen mechanischen Beanspruchungen standhalten kann. Daher bedarf es keiner weiteren keramischen oder druckverteilenden Dichtringe oder andere Befestigungsmittel. Die Befestigungskräfte verteilen sich über die große Oberfläche der hohlzylindelförmigen Glaseinschmelzung 12, so dass eine beanspruchbare Befestigung allein durch die Glaseinschmelzung 12 gewährleistet ist. Die Glaseinschmelzung 12 kann insbesondere auch die an der Abgasanlage Kraftfahrzeuges auftretenden Schwingungskräfte dauerhaft aufnehmen.

Die Befestigung des Rohres 04 in der Befestigungshülse 09 ist durch die Verwendung von Glas in der Glaseinschmelzung 12 beständig gegenüber den aggressiven Medien, die bei der Verbrennung von Kraftstoffen entstehen. Die Glaseinschmelzung 12 ist zudem korrosionsbeständig gegenüber eintretendem Wasser. Dies gestattet den Einsatz des Messfühlers auch in anderen Prozessen, wo aggressive Medien und hohe Temperaturen auftreten.

Die kreisrunde Form der Sensorschutzhülse 03 erlaubt eine beliebige Winkelstellung in der Achse der Sensorschutzhülse beim Einsetzen des Messfühlers in das Gehäuse der Abgasanlage. Es muss daher beim Einbau des Abgastemperatursensors 01 keine vorgegebene Winkelstellung eingehalten werden.

Zur Herstellung der Glaseinschmelzung 12 zur Befestigung des Rohres 04 in der Befestigungshülse 09 wird ein hohlzylinderförmiger Sinterglaskörper eingesetzt. Zunächst wird hierfür Glas mit einem Bindemittel zu einem hohlzylinderförmigen Sinterglaskörper gepresst. Das Bindemittel wird nachfolgend durch Abdampfen entfernt. In dem Sinterglaskörper verbleiben dabei kleine, Pufferzonen bildende Blasen. Anschließend wird unter Druck und bei Temperaturen von etwa 750°C ein Sintervorgang durchgeführt, um dem Sinterglaskörper eine ausreichende Festigkeit zu geben.

Der gepresste Sinterglaskörper entspricht in seinen Abmessungen im Wesentlichen dem Spalt 13 zwischen dem Rohr 04 und der Befestigungshülse 09. Der Glaskörper ist so dimensioniert, dass er straff aber ohne die Gefahr einer Beschädigung des Rohrs 04 in den Spalt 13 eingebracht werden kann. Die zylinderförmige Gestaltung des Rohres 04 und der Öffnung der Befestigungshülse 09 erlauben beim Ineinanderschieben des Rohres 04 und des Glaskörpers in der Befestigungshülse 09 eine beliebige Drehung des Rohres 04 in dessen Achse sowie einen großen Bereich, in welchem das Rohr 04 zur Positionierung innerhalb des Glaskörpers in der Befestigungshülse 09 verschoben werden kann. Daher können auch bei der Verwendung gleicher Befestigungshülsen 09, gleicher Glaskörper und gleicher Rohre 04 Befestigungen für Sensoren hergestellt werden, die eine unterschiedliche Länge, des in den Abgasstrom hineinragenden Rohres 04 aufweisen.

Nachdem das Rohr 04, der Glaskörper und die Befestigungshülse 09 zusammengefügt worden sind, erfolgt ein Einschmelzen des Glaskörpers bei Temperaturen von etwa 1000° Celsius. Durch diesen Schmelzvorgang bildet sich aus dem Sinterglaskörper die Glaseinschmelzung 12, welche das Rohr 04 mit der Befestigungshülse 09 mechanisch fest und gasdicht verbindet. Nach dem Abschluss des Schmelzvorganges kann das Rohr 04 nicht mehr aus der Befestigungshülse 09 entfernt werden. Das erzeugte Glasschmelze 12 weist eine Dichte von etwa 3,1 g-cm⁻³ auf. Der lineare thermische Ausdehnungskoeffizient des Glases beträgt etwa 0,54 ·10⁻⁶ pro Kelvin. Durch den sehr geringen linearen thermischen Ausdehnungskoeffizienten des verwendeten Glases ist gewährleistet, dass sich die Größe der Glaseinschmelzung 12 bei den großen Temperaturunterschieden nahezu nicht ändert und so eine Schädigung der Glaseinschmelzung 12 oder des Rohres 04 vermieden wird.

Das Rohr 04 ist vorzugsweise aus Aluminiumoxid gefertigt und weist z.B. zwei durchgehende axiale Kapillare auf, durch welche die Anschlussleitungen geführt sind. Da Aluminiumoxid elektrisch isolierend wirkt, sind die beiden Anschlussleitungen durch die Führung in getrennten Kapillaren des Rohres 04 gegeneinander elektrisch isoliert. An dem Ende des Rohres, welches sich im eingebauten Zustand außerhalb der Abgasanlage befindet, treten die Anschlussleitungen 06 aus dem Rohr 04 heraus und sind dort mit zwei Verbindungsleitungen 14 des Kabels 07 durch elektrische Verbindungen 16 verbunden. Diese Verbindungen 16 sind durch Lötverbindungen, durch Crimpverbindungen oder auch durch Schweißverbindungen, insbesondere durch Ultraschallschweißverbindungen gebildet. Im Bereich der Verbindungen 16 sind die Anschlussleitungen 06 des Sensorelements 02 und die Verbindungsleitungen 14 des Kabels 07 durch ein Keramikplättchen 17 gegeneinander elektrisch isoliert. Alternativ zum Keramikplättchen 17 kann eine Teflonscheibe zur Isolierung der Anschlussleitungen und der Verbindungsleitungen 14 zwischen die Anschlussleitungen 06 und zwischen die Verbindungsleitungen 14 eingebracht sein.

Die elektrische Isolierung der Anschlussleitungen 06 und der Verbindungsleitungen 14 kann alternativ auch durch eine Umspritzung der Anschlussleitungen 06 und der Verbindungsleitungen 14 mit einem Höchtemperaturkunststoff oder durch ein Vergießen der Anschlussleitungen 06 und der Verbindungsleitungen 14 in Gießharz oder Hochtemperaturkleber erfolgen. Die elektrischen Verbindungen 16 sind mit einer metallischen Anschlussschutzhülse 18 geschützt. Die Anschlussschutzhülse 18 ist mit einer Schweißverbindung an der Befestigungshülse 09 befestigt. Zur Befestigung des Kabels 07 in der Anschlussschutzhülse 18 und zur Abdichtung des Kabel 07 an der Einführung in die Anschlussschutzhülse 18 ist die Anschlussschutzhülse 18 durch eine Einrollung 19 in ihrem Querschnitt verkleinert. Das Kabel 07 ist hierdurch mit einer Quetschverbindung in der Anschlussschutzhülse 18 befestigt. Zum Schutz des Kabels 07 ist vor der Herstellung der Quetschverbindung ein Kabelschutzschlauch 21 aus Polytetrafluorethylen auf das Kabel 07 aufgeschoben.

Die Befestigungshülse 09 ist vorzugsweise aus einem ferritischen Edelstahl gefertigt. Die Sensorschutzhülse 03 ist vorzugsweise aus einer Nickel-Chrom-Legierung, insbesondere Inconel 600 Nr. 2.4816 gefertigt und mit einer Schweißverbindung an der Befestigungshülse 09 befestigt. Die Sensorschutzhülse 03 ist in der Nähe des Sensorelements 02 mit mehreren Löchern 22 versehen und an ihrem freien Ende geschlossen. Durch die Löcher zieht ein Teil des Abgasstromes, so dass permanent Abgas auf das Sensorelement 02 einströmt.

Alternativ kann die Sensorschutzhülse 03 durch ein nahtloses Edelstahlrohr gebildet sein, wobei die Öffnung am freien Ende durch Taumeln auf 2,0 bis 2,5 Millimeter verkleinert ist. In das freie Ende des Edelstahlrohres können beispielsweise acht Langlöcher eingebracht sein. Statt eines nahtlosen Rohres kann auch ein geschweißtes Rohr verwendet werden. Die Sensorschutzhülse 03 kann alternativ auch durch ein gerolltes Rohr gebildet sein, wobei das Rohr mit durch Clinchen (Druckfügen) geschaffenen Verbindungsstellen versehen ist und die Öffnung am freien Ende mit einer Schutzkappe verschlossen ist. Die Schutzkappe kann ebenfalls mit einer Öffnung von 2,0 bis 2,5 Millimeter versehen sein. Grundsätzlich kann aber auch die Öffnung am freien Ende der Sensorschutzhülse 03 vollständig verschlossen sein. Die Sensorschutzhülse 03 kann auch zweistückig derart ausgebildet sein, dass das erste Stück der Sensorschutzhülse 03 gemeinsam mit der Befestigungshülse 09 durch Tiefziehen einer Platine gefertigt wird und das zweite Stück der Sensorschutzhülse 03 in einem zweiten Tiefziehen gefertigt wird, wobei die beiden Stücke der Sensorschutzhülse 03 anschließend verschweißt werden.

Die Auswirkungen von mechanischen Schwingungen in der Abgasanlage auf den Abgastemperatursensor 01 können durch einen oder mehrere Stabilisierungsringe (nicht gezeigt) in der Sensorschutzhülse 03 gemindert werden, die vorzugsweise in der Nähe des Sensorelements 02 angeordnet sind. Der Stabilisierungsring kann fest in der Sensorschutzhülse 03 eingebracht sein und eine Öffnung zur Durchführung des Rohres 04 aufweisen, wobei diese Öffnung geringfügig größer als das Rohr 04 ist, so dass sich das Rohr 04 ohne größere Kraftaufwendung in den Stabilisierungsring einfügen lässt. Alternativ kann der Stabilisierungsring fest auf dem Rohr 04 aufgebracht sein und einen Außendurchmesser aufweisen, der geringfügig kleiner als der Innendurchmesser der Sensorschutzhülse 03 ist. Es können auch beide Ausführungsformen dieser Stabilisierungsringe kombiniert werden. Die Stabilisierungsringe bestehen vorzugsweise aus einem Keramikwerkstoff oder einem Kohlenstoffwerkstoff, der für die Betriebstemperatur geeignet ist.

In einer abgewandelten Ausführungsform weist der Abgastemperartursensor 01 keine Sensorschutzhülse 03 auf. Diese Ausführungsform ist zu bevorzugen, wenn Partikel, die das Sensorelement 02 oder das Rohr 04 schädigen könnten, in dem zu messenden Abgasstrom ausgeschlossen werden können. Vorteilhaft an dieser Ausführungsform ist neben der Einsprung der Sensorschutzhülse 03 und der Stabilisierungsringe, dass der zu messende Abgasstrom ungehindert auf das Sensorelement 02 einströmen kann und so eine genaue Messung ermöglicht ist.

Der Messfühler kann als Abgastemperatursensor 01 oder als Messfühler für eine andere physikalische Größe wie beispielsweise dem Luftdruck ausgeführt sein. Eine andere Ausführungsform des Messfühlers dient der Bestimmung der Stoffzusammensetzung, insbesondere der Bestimmung eines Gases wie beispielsweise Kohlenmonoxid oder Ammoniak.

Der Messfühler kann auch mit mehreren Sensorelementen 02 ausgeführt sein. So können beispielsweise ein erstes Sensorelement zur Bestimmung der Abgastemperatur und ein zweites Sensorelement zur Bestimmung des Gehaltes an Kohlenmonoxid im Abgas gemeinsam am Rohr 04 angeordnet sein. Das Rohr 04 weist in dieser Ausführungsform vier durchgehende Öffnungen zur Durchführung von vier Anschlussleitungen 06 der Sensorelemente 02 auf. Die Anordnung von mehreren Sensorelementen 02 im Messfühler 01 ist problemlos möglich, da die Befestigung des Rohres 04 an der Befestigungshülse 09 sowohl hinsichtlich der mechanischen Festigkeit als auch hinsichtlich der elektrischen Isolation der Anschlussleitungen 06 die dafür notwendigen Voraussetzungen bietet. Daher können auch mehr als zwei Sensorelemente im Messfühler integriert sein, so dass durch einen einzigen multifunktionalen Messfühler mehrere herkömmliche Messfühler ersetzt werden können. Hierdurch ist der Aufwand an Installation, Kabelzuführungen, Befestigungsmitteln usw. deutlich gemindert.

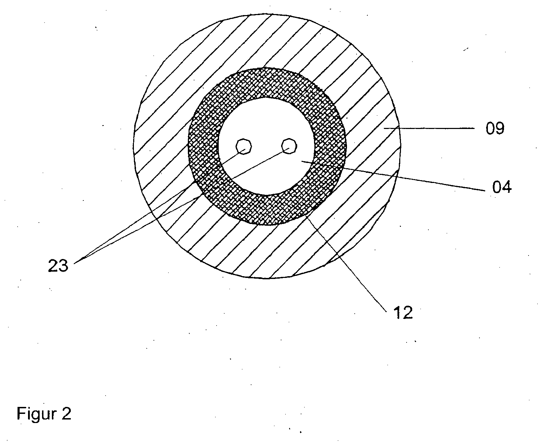

Fig. 2 zeigt eine Schnittdarstellung der Befestigungshülse 09 und des Rohres 04 mit der Glaseinschmelzung 12. Der Spalt 13 zwischen der Befestigungshülse 09 und dem Rohr 04 ist bei dieser Ausführungsform größer ausgeführt, so dass die Glaseinschmelzung 12 eine größere Dicke aufweist. Weiterhin sind in dieser Darstellung die beiden Kapillaren 23 zur Durchführung der Anschlussleitungen 06 gezeigt.

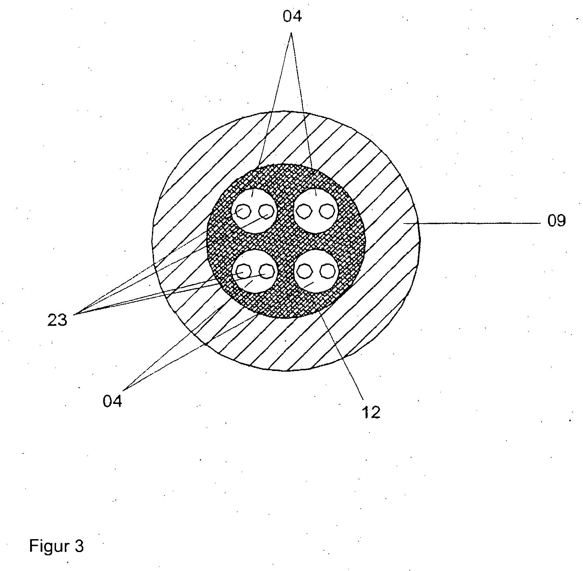

Fig. 3 zeigt eine Schnittdarstellung der Befestigungshülse 09 mit der Glaseinschmelzung 12 bei einer abgewandelten Ausführungsform des Messfühlers mit mehreren Sensorelementen 02. In dieser Ausführungsform weist der Messfühler vier Sensorelemente auf, wobei der Messfühler für jedes Sensorelement 02 ein separates Rohr 04 besitzt. Folglich sind vier Rohre 04 durch die Befestigungshülse 09 geführt. Jedes Rohr 04 hat zwei Kapillare 23 zur Durchführung der Anschlussleitungen 06 des jeweiligen Sensorelements 02.

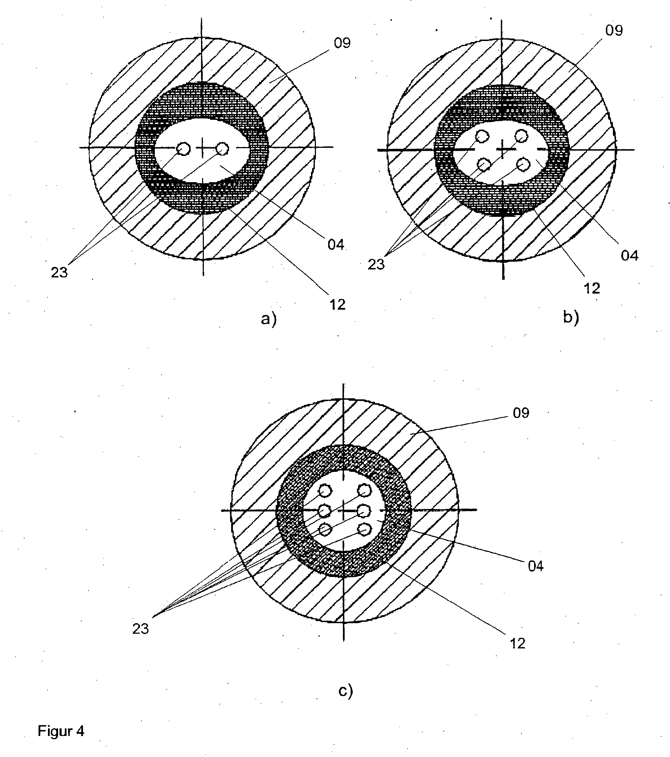

Fig. 4 zeigt drei Schnittdarstellungen der Befestigungshülse 09 und des Rohres 04 mit der Glaseinschmelzung 12 von vier verschiedenen Ausführungsformen des Messfühlers. Abbildung a) der Fig. 4 zeigt eine Ausführungsform, bei der das Rohr 04 eine ovale Querschnittsfläche aufweist. Ein Vorteil dieser Ausführungsform besteht im verringerten Strömungswiderstand des Rohres 04 im Abgasstrom, wenn das Rohr 04 mit der schmalen Seite in Richtung des Abgas-Stromes ausgerichtet ist. Dies setzt außerdem voraus, dass auch die Sensorschutzhülse 03 oval geformt ist, insofern diese verwendet wird. Es liegt im Wissen und Können des Fachmannes, die Form des Rohres 04 entsprechend den Anforderungen an den jeweiligen Messfühler auszuwählen. Es sind auch Rohre mit einem dreieckigen oder quadratischen Querschnitt oder aber auch spezielle Führungsnuten im Querschnitt möglich.

Abbildung b) der Fig. 4 zeigt eine Ausführungsform, bei welcher der Messfühler zwei Sensorelemente 02 umfasst, wobei die Anschlussleitungen 06 beider Sensorelemente 02 durch ein gemeinsames Rohr 04 geführt sind. Daher weist das Rohr 04 vier Kapillaren 23 auf. Das Rohr 04 ist wie bei der in Abbildung a) der Fig. 4 gezeigten Ausführungsform oval geformt.

Abbildung c) der Fig. 4 zeigt eine Ausführungsform, bei welcher der Messfühler drei Sensorelemente 02 umfasst, wobei die Anschlussleitungen 06 aller drei Sensorelemente 02 durch ein gemeinsames Rohr 04 geführt sind. Daher weist das Rohr 04 sechs Kapillaren 23 auf. Selbstverständlich kann das Rohr 04 in weiteren Ausführungsformen mit einer größeren Anzahl an Kapillaren 23 ausgeführt sein. Eine Anzahl von mehr als zwei Kapillaren 23 im Rohr 04 ist außerdem vorteilhaft, wenn das Sensorelement 02 mehr als zwei Anschlussleitungen 06 benötigt.

### Bezugszeichenliste

- 01: Abgastemperatursensor
- 02: Sensorelement
- 03: Sensorschutzhülse
- 04: Rohr / Stab
- 05: -
- 06: Anschlussleitung
- 07: Kabel
- 08: Stecker
- 09: Befestigungshülse
- 10: -
- 11: Hohlmutter
- 12: Glaseinschmelzung
- 13: Spalt
- 14: Verbindungsleitung
- 15: -
- 16: elektrische Verbindung
- 17: Keramikplättchen
- 18: Anschlussschutzhülse
- 19: Einrollung
- 20: -
- 21: Kabelschutzschlauch
- 22: Löcher
- 23: Kapillare

## Patentansprüche

1. Verfahren zur Herstellung einer Glasfüllung (12) zur Abdichtung und Befestigung eines Messfühlers (01) für die Bestimmung einer physikalischen Größe oder einer Stoffzusammensetzung in einem Messvolumen, wobei der Messfühler
- mindestens ein Sensorelement (02);
- ein Rohr oder einen Stab (04), an dessen in das Messvolumen gerichtetem Ende das Sensorelement (02) angebracht ist und welches die für den Anschluss des Sensorelements notwendigen elektrischen Anschlussleitungen (06) aufnimmt; und
- eine Befestigungshülse (09) mit Öffnung, durch welche das Rohr oder der Stab (04) durchgeführt und an einem Gehäuse befestigbar ist, aufweist, wobei zwischen der Innenfläche der aus einem metallischen Material bestehenden Befestigungshülse (09) und dem aus einem keramischen Material bestehenden Rohr oder Stab (04) ein umlaufender Spalt (13) gebildet ist, dessen Höhe größer als der Durchmesser der Öffnung ist, wobei das Verfahren
die folgenden Schritte umfasst:
- Bereitstellen eines durch Pressen erzeugten hohlzylindrischen Sinterglaskörper-Formlings, der eine Form entsprechend dem Spalt (13) aufweist, wobei der Spalt für die Einglasung im Bereich bis zu 8/10 mm Breite liegt;
- Anordnung des Sinterglaskörper-Formlings im Messfühler (01) zwischen Befestigungshülse (09) und Rohr (04), welches an seinem von der Befestigungshülse entfernten Ende das Sensorelement (02) trägt;
- Erwärmung des Sinterglaskörper-Formlings auf die Schmelztemperatur des Glases, um das Rohr (04) in der Befestigungshülse (09) gasdicht einzuschmelzen;
- Abkühlung und Erstarrung der Glasschmelze (12), wobei das Verbindungsmittel Glas als druckübertragendes Dichtmittel zu verstehen ist.

## Claims

1. A method for producing a glass filling (12) for sealing and attaching a probe (01) for determining a physical parameter or a material composition in a measuring volume, wherein the probe comprises
- at least one sensor element (02),
- a tube or a rod (04) to the end of which, that is directed into the measuring volume, the senor element (02) is mounted, and which receives the electrical connection lines (06) required for the connection of the sensor element;
- a fastening sleeve (09) having an opening through which the tube or the rod (04) can be passed and fastened to a housing, wherein between the inner surface of the fastening sleeve (09) made of a metallic material and the tube or rod (04) made of a ceramic material, a circumferential gap (13) is formed, the height of which is larger than the diameter of the opening, wherein the method comprises the following steps:
- providing a shaped product in the form of a sinter glass body which has been produced by compression and comprises a shape corresponding to the gap (13), wherein the gap for glass sealing is in the range of up to 8/10 mm in width;
- arranging the shaped product in the form of the sinter glass body within the probe (01) between the fastening sleeve (09) and the tube (04) which carries the sensor element (02) at its end distal from the fastening sleeve;
- heating the shaped product in the form of the sinter glass body to the glass melting temperature in order to seal the tube (04) in the fastening sleeve (09) in a gas-tight manner;
- cooling and solidifying the glass melt (12), wherein the bonding agent glass has to be understood as a pressure transmitting sealant.

## Revendications

1. Procédé pour fabriquer un remplissage en verre (12) pour étancher et fixer un capteur de mesure (01) pour la détermination d'une grandeur physique ou d'une composition de matière dans un volume de mesure, dans lequel le capteur de mesure comprend
- au moins un élément capteur (02) ;
- un tube ou un barreau (04), tel que l'élément capteur (02) est rapporté à l'extrémité du tube ou du barreau dirigée vers le volume de mesure, et qui reçoit les lignes de raccordement électrique (06) nécessaires pour le raccordement de l'élément capteur ; et
- une douille de fixation (09) avec une ouverture à travers laquelle est passé le tube ou le barreau (04), et qui est susceptible d'être fixée sur un boîtier,
dans lequel entre la surface intérieure de la douille de fixation (09) constituée en un matériau métallique, et le tube ou le barreau (04) constitué en un matériau céramique, il est formé une fente périphérique (13) dont la hauteur est supérieure au diamètre de l'ouverture, dans lequel le procédé inclut les étapes suivantes :
- préparation d'une ébauche de corps en verre fritté cylindrique creuse engendrée par pressage, qui présente une forme correspondre à la fente (13), et pour la vitrification, la fente a une largeur dans la plage jusqu'à 8/10 mm ;
- agencement de l'ébauche de corps en verre fritté dans le capteur de mesure (01) entre la douille de fixation (09) et le tube (04), qui porte l'élément capteur (02) à son extrémité éloignée de la douille de fixation ;
- réchauffement de l'ébauche de corps en verre fritté à la température de fusion du verre, afin d'intégrer le tube (4) par fusion dans la douille de fixation (09) de manière étanche aux gaz ;
- refroidissement et figeage du verre en fusion (12), de sorte que le verre à titre de moyen de liaison fait office de moyen d'étanchement assurant le transfert de pression.
